# EUROPÄISCHE PATENTANMELDUNG

(11) **EP 1 405 562 A1**
(43) Veröffentlichungstag der Anmeldung: **07.04.2004**
(21) Anmeldenummer: 03008513.8
(22) Anmeldetag: 12.04.2003
(51) Int. Cl.: A01M 17/00

(54) **Vorrichtung und Verfahren zum Ausbringen eines Vergrämungsmittels für Maulwürfe**

(30) Priorität: 04.10.2002 DE 20215300 U
(71) Anmelder: Heide, Gotthard, 33739 Bielefeld (DE)
(72) Erfinder: Heide, Gotthard, 33739 Bielefeld (DE)
(74) Vertreter: TER MEER STEINMEISTER & PARTNER GbR

(57) **Zusammenfassung**

Die Erfindung betrifft eine Vorrichtung zum Ausbringen eines flüssigen Vergrämungsmittels für Maulwürfe, Wühlmäuse und dergleichen
- mit einem Behälter (52) zur Aufnahme des Vergrämungsmittels (66),
- einer rohrförmigen Lanze (10,72) mit einem vorderen und einem hinteren Ende, deren vordere Austrittsöffnung durch einen Schutzkörper wenigstens teilweise abgeschirmt ist.
- einer Leitung (68,70), die den Behälter (52) mit dem hinteren Ende der Lanze (10,72) verbindet.
- einer Druckquelle (52,58,60,62,64) zum Austreiben des Vergrämungsmittels (66) aus dem Behälter (52) durch die Lanze (10,78) und
- einer Betätigungseinrichtung (74,76) zur Aktivierung der Druckquelle.

Die Erfindung betrifft im übrigen ein entsprechendes Verfahren.

## Beschreibung

Die Erfindung betrifft eine Vorrichtung zum Ausbringen eines flüssigen Vergrämungsmittels für Maulwürfe. Wühlmäuse und dergleichen. Die Erfindung betrifft im übrigen ein entsprechendes Verfahren.

Maulwürfe. Wühlmäuse und ähnliche Kleintiere werden heute aus Gründen des Umwelt- und Tierschutzes zunehmend nicht mehr mit Giften oder Fallen bekämpft. Vielmehr wird versucht, diese Tiere zumindest aus denjenigen Bereichen zu vertreiben, in denen die Wühltätigkeit der Tiere besonders störende Spuren hinterläßt. In diesem Zusammenhang werden insbesondere sogenannte Maulwurfhaufen als äußerst störend in einer gepflegten Gartenlandschaft empfunden. Andererseits gibt es Landschaftsbereiche, in denen die Spuren der Wühltätigkeit der Tiere kaum sichtbar sind und zumindest nicht unangenehm auffallen. Es wird daher zunehmend angestrebt, die Tiere aus den zu schützenden Bereichen lediglich in die weniger schützenswerten Bereiche zu verdrängen, sie zu vergrämen, ohne sie zu töten.

Es gibt eine große Anzahl von Vorschlägen zum Vertreiben der als störend empfundenen Tiere, etwa durch die Erzeugung von bestimmten, für die Tiere unangenehmen Geräuschen oder die Ausbringung von Geruchsstoffen.

Den meisten bekannten Verfahren dieser Art ist gemeinsam, dass sie in ihrer Wirkung begrenzt oder sogar vollständig unwirksam sind. Dies gilt ebenso für die bekannten Vorrichtungen.

Der Erfindung liegt daher die Aufgabe zugrunde, eine Vorrichtung der eingangs genannten Art zu schaffen, die es gestattet, ein Vergrämungsmittel für die genannten Tiere in einfacher und wirksamer Weise auszubringen. Ferner soll ein entsprechendes Verfahren geschaffen werden.

Die gestellte Aufgabe wird erfindungsgemäß gelöst durch eine Vorrichtung zum Ausbringen eines flüssigen Vergrämungsmittels für Maulwürfe, Wühlmäuse und dergleichen,
- mit einem Behälter zur Aufnahme des Vergrämungsmittels.
- einer rohrförmigen Lanze mit einem vorderen und einem hinteren Ende. deren vordere Austrittsöffnung durch einen Schutzkörper wenigstens teilweise abgeschirmt ist,
- einer Leitung, die den Behälter mit dem hinteren Ende der Lanze verbindet,
- einer Druckquelle zum Austreiben des Vergrämungsmittels aus dem Behälter durch die Lanze und
- einer Betätigungseinrichtung zur Aktivierung der Druckquelle.

Vorzugsweise wird die Druckquelle gebildet durch ein im Behälter erzeugtes Druckluftpolster, das bei Aktivierung der Betätigungseinrichtung das Vergrämungsmittel über die Lanze auspreßt.

Alternativ kann die Druckquelle eine Pumpe sein, die von Hand oder elektrisch betätigbar sein kann.

Die Betätigungseinrichtung besteht im ersteren Falle durch ein Ventil im hinteren Bereich der Lanze, das mit Hilfe eines Handgriffs betätigbar sein kann.

Das erfindungsgemäße Verfahren zur Lösung der zweiten Teilaufgabe wird durchgeführt unter Verwendung einer Vorrichtung der hier beschriebenen Art und ist dadurch gekennzeichnet, dass ein Vergrämungsmittel in den Behälter gefüllt wird, dass die Lanze in dem zu schützenden Geländebereich in den Boden gestochen wird und dass die Betätigungseinrichtung aktiviert wird, während sich die Lanze im Boden befindet. Dabei wird die Lanze vorzugsweise bis zu ca. 1 m Tiefe oder auch über ca. 1 m flach und schräg in den Boden gestochen. Das Vergrämungsmittel kann dabei während des Rückzugs der Lanze aus dem Boden durch wiederholtes Öffnen des Ventils über einen größeren Bereich verteilt abgegeben werden.

Das erfindungsgemäße Verfahren unterscheidet sich von bekannten Maßnahmen zur Vergrämung von Maulwürfen oder Wühlmäusen dadurch, dass es nicht notwendig ist. die Gänge der Tiere sorgfältig zu öffnen und ein Vergrämungsmittel in diese Gänge zu gießen. Bei dieser bekannten Maßnahme erreicht das Vergrämungsmittel nur die oberen, oberflächennahen Bereiche des Erdbodens, und die Abgabe des Vergrämungsmittels bleibt in jedem Fall lokal eng begrenzt. Es hat sich gezeigt, dass das erfindunsgemäße Verfahren sehr rasch durchgeführt werden kann, da die Lanze über den zu schützenden Bereich verteilt an vielen Positionen in den Boden gestochen werden kann und dabei bewirkt wird, dass das Vergrämungsmittel über die Fläche verteilt bis hin zu einer Tiefe von ca. 1 m ausgebracht werden kann. Auf diese Weise ist gewährleistet, dass das vorhandene Gelände sowohl über die Fläche als auch über die Tiefe, bis zu der sich die Gänge der genannten Tiere häufig erstrecken können, wirksam geschützt ist.

Die vordere Austrittsöffnung der Lanze kann in unterschiedlicher Weise durch den Schutzkörper gegen das Eintreten von Erdboden beim Einstechen in den Boden geschützt sein. In jedem Falle sollte vor dem Öffnungsbereich der Austrittsöffnung ein kugelförmiger, kegelförmiger oder plattenförmiger Schutzkörper vorgesehen sein, in dessen Umkreis ein ringförmiger Austrittsbereich frei bleibt. Die Lanze kann an ihrem vorderen Ende auch vollständig verschlossen und mit einer oder mehreren seitlichen Austrittsbohrungen versehen sein.

Schließlich kann die Austrittsöffnung auch dadurch gegen Eintreten von Erdboden beim Einstechen der Lanze geschützt werden, dass die Austrittsöffnung eine Verengung aufweist, die das Eindringen von nennenswerten Mengen des Erdbodens verhindert. Geringe Mengen des Erdbodens können durch den Druck des Vergrämungsmittels ausgeblasen werden.

Als besonders zweckmäßig hat sich erwiesen, den gesamten Lanzenkanal im Inneren der Lanze oder zumindest dessen vorderen Bereich ringförmig auszubilden, indem beispielsweise ein dünner Draht durch das Innere des Lanzenkanals geführt wird, der am vorderen und hinteren Ende des Lanzenkanals verankert wird. Dadurch wird die Querschnittsfläche des Lanzenkanals auf einen relativ schmalen Ring begrenzt. In diesem schmalen Ring bewirken die Adhäsionskräfte zwischen dem Material der Lanze und des Drahtes einerseits und dem Vergrämungsmittel andererseits, dass das Vergrämungsmittel nur bei Betätigung der Druckquelle austritt, der gesamte Inhalt des Lanzenkanals jedoch nicht unter Einwirkung der Schwerkraft austritt. Dadurch wird verhindert, dass das zumeist übelriechende Vergrämungsmittel auf die Oberfläche des Erdbodens oder auch auf die Schuhe des Benutzers der Vorrichtung herabtropft.

Im folgenden werden bevorzugte Ausführungsbeispiele der Erfindung anhand der beigefügten Zeichnung näher erläutert.
- Fig. 1: zeigt einen Längsschnitt durch den vorderen Bereich einer Lanze als Teil einer Ausführungsform der Erfindung;
- Fig. 2: zeigt einen entsprechenden Längsschnitt gemäß einer anderen Ausführungsform der Erfindung;
- Fig. 3: ist eine entsprechende Darstellung einer dritten Ausführungsform der Erfindung;
- Fig. 4: zeigt eine schematische Gesamtdarstellung einer erfindungsgemäßen Vorrichtung;
- Fig. 5: zeigt einen Teilschnitt durch eine Lanze mit einem in den Austrittskanal der Lanze eingelegten Draht.

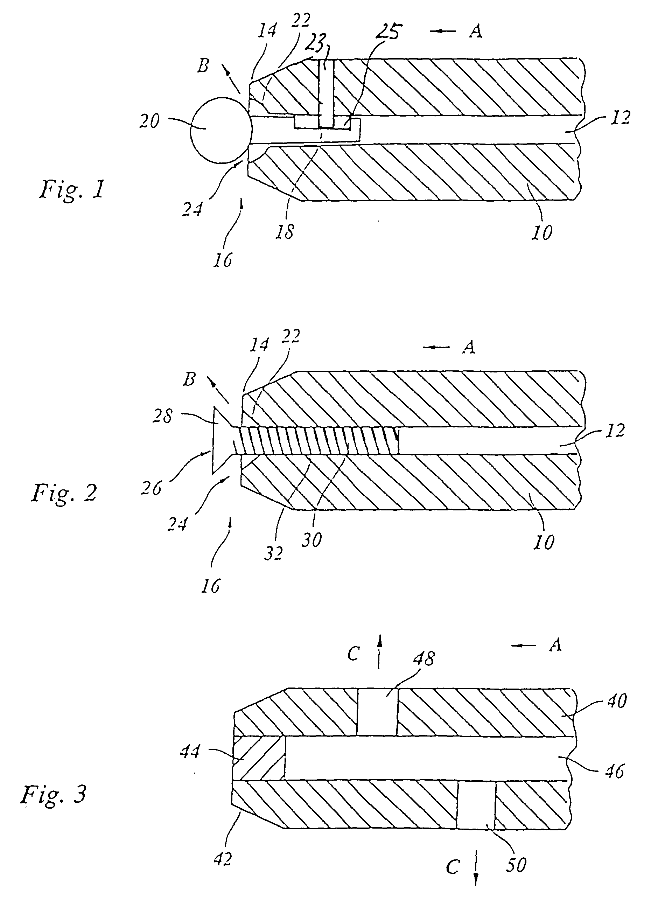

In Fig. 1 ist das vordere Ende einer erfindungsgemäßen Lanze 10 im Längsschnitt dargestellt. Die Lanze besitzt im Inneren einen Lanzenkanal 12, der mit einem in Fig. 1 nicht gezeigten Druckbehälter für die Aufnahme eines Vergrämungsmittels verbunden ist. Das Vergrämungsmittel kann durch ein Druckluftpolster unter Druck gesetzt werden, wie es bei Gartenspritzen üblich ist. Der Druck kann direkt durch eine Handpumpe im Druckbehälter erzeugt werden.

Zwischen dem Druckbehälter und der Lanze 10 befindet sich ein nicht dargestelltes Ventil mit einem Betätigungshebel, der das Vergrämungsmittel aus dem Druckbehälter in den Lanzenkanal 12 strömen läßt.

Das Ventil kann auch in Verbindung mit der Lanze in deren rückwärtigen Bereich angeordnet und mit einem Betätigungshebel oder einem Betätigungsknopf versehen sein. In diesem Falle bilden die Lanze und das Ventil eine zusammenhängende Einheit, so dass die Lanze mit einer Hand gehalten und in den Erdboden gestochen und zugleich mit derselben Hand das Ventil betätigt werden kann.

Bei der Ausführungsform gemäß Fig. 1 befindet sich im Bereich des vorderen Endes 14 der Lanze 10 ein Schutzkörper 16, der aus einem in den Lanzenkanal eintretenden und in diesem axial verschiebbaren Schaft 18 und einem kugelförmigen Kopf 20 zusammengesetzt ist. Dieser Schutzkörper 16 kann sich zwischen zwei Endstellungen hin und her bewegen. Dabei gleitet der Schaft 18 in Längsrichtung in dem Lanzenkanal 12 hin und her. Fig. 1 zeigt die geöffnete Stellung, in der der kugelförmige Kopf 20 von seinem kugelschalenförmigen Sitz 22 abgehoben ist, so daß zwischen dem Sitz 22 und dem Kopf 20 ein Zwischenraum 24 entsteht, durch den das Vergrämungsmittel entsprechend dem Pfeil B schräg nach außen austreten kann.

Wenn die Lanze 10 in den Boden gedrückt wird, wird der Schutzkörper 16 durch den Gegendruck des Erdbodens zurückgeschoben, bis der kugelförmige Kopf 20 gegen den kugelschalenförmigen Sitz 22 anliegt, die Austrittsöffnung also geschlossen ist. In dieser Stellung kann der Erdboden nicht in den Lanzenkanal 12 eindringen und diesen verstopfen.

Nach dem Einstechen der Lanze in den Erdboden wird die Lanze vorzugsweise leicht zurückgezogen, und anschließend wird das Vergrämungsmittel unter Druck in den Lanzenkanal 12 eingeleitet. Dieser Druck reicht im allgemeinen aus, den Schutzkörper 16 wieder in die in Fig. 1 gezeigte geöffnete Stellung zu schieben.

Gemäß der Darstellung in Fig. 1 weist der Schaft 18 in Bezug auf seinen Durchmesser ein geringes Spiel gegenüber dem Innendurchmesser des Lanzenkanals 12 auf, so daß das Vergrämungsmittel zwischen dem Schaft 18 und den Innenwänden des Lanzenkanals 12 hindurchtreten kann. Es ist aber auch möglich. auf dem Umfang des Schaftes 18 eine achsenparallele Nut einzuarbeiten, die als Durchlaß für das Vergrämungsmittel dient.

Während eine der Endstellungen des Schutzkörpers dadurch bestimmt wird, daß der kugelförmige Kopf 20 in der geschlossenen Stellung gegen den kugelschalenförmigen Sitz 22 anliegt, ist zur Begrenzung der Öffnungsbewegung ein in der Zeichnung nicht dargestellter Anschlag vorgesehen, der verhindert, daß der Schutzkörper 16 weiter aus dem Lanzenkanal 12 austritt, als es in Fig. 1 gezeigt ist. Dieser Anschlag wird beispielsweise gebildet durch einen radial in die Lanze eintretenden Stift 25, der in den Lanzenkanal 12 hineinragt und hier in eine Längsnut 27 in dem Schaft 18 des Schutzkörpers 16 eintritt.

Anstelle des kugelförmigen Kopfes kann jede Art von Kopf vorgesehen sein, der geeignet ist, das vordere Ende des Lanzenkanals beim Eindringen der Lanze in die Erde abzudecken. In Betracht kommt vor allem ein kegelförmiger oder auch ein plattenförmiger Kopf. Die genaue Form des Kopfes ist für die Funktion der Erfindung nicht notwendig wesentlich.

Gemäß Fig. 2 ist anstelle des in Fig. 1 gezeigten Ventils 16 eine Schraube 26, insbesondere Senkkopfschraube 26 vorgesehen, die einen Kopf 28 und einen Schaft 30 mit Außengewinde aufweist, der in ein Innengewinde 32 im vorderen Ende des Lanzenkanals 12 eingeschraubt ist. In nicht gezeigter Weise befindet sich auf dem Umfang des Schafts 30 der Schraube 26 eine achsenparallele Nut als Durchlaß für das Vergrämungsmittel. Bei der Ausführungsform gemäß Fig. 2 wird zwar die Austrittsöffnung des Lanzenkanals 12 beim Einstechen der Lanze 10 in den Erdboden in Richtung des Pfeiles A nicht vollständig verschlossen. Der Kopf 28 der Schraube 26 schirmt aber die Eintrittsöffnung gegenüber dem direkten Eindringen von Erdboden zumindest so weit ab, daß der Erdboden nicht direkt in den Kanal 12 eingedrückt werden kann. Die Verwendung einer Schraube 26 hat im übrigen den Vorteil, daß die Austrittsöffnung verstellbar ist und auch vollständig verschlossen werden kann, wenn beispielsweise ein unbeabsichtigter Austritt des Vergrämungsmittels verhindert werden soll.

Fig. 3 zeigt eine Ausführungsform mit einer Lanze 40, bei der das vordere Ende 42 vollständig durch einen Blindstopfen 44 im Lanzenkanal 46 verschlossen ist. Austrittsöffnungen 48 und 50 sind durch Wände der Lanze 40 zur Seite gerichtet, so daß das Vergrämungsmittel in Richtung der Pfeile C abgegeben werden kann. Vorzugsweise sind die Austrittsöffnungen 48 und 50 schräg nach vorne, zum Ende 42 der Lanze gerichtet, so daß verhindert werden kann, daß das Vergrämungsmittel in Richtung des Benutzers des Geräts gespritzt wird, wenn die Lanze nicht tief genug in den Erdboden eingedrungen ist.

Wie bereits erwähnt wurde, wird eine besonders günstige Wirkung erzielt, wenn das Vergrämungsmittel nicht nur in die Gänge der Tiere, sondern großflächig und ohne Rücksicht auf den Verlauf der Gänge in den Erdboden eingebracht wird. Damit dies rasch und leicht geschehen kann, sollte der Durchmesser der Lanze relativ gering sein. 5 mm etwa können als obere Grenze betrachtet werden.

An der Lanze kann ein seitlicher Anschlag vorgesehen sein, durch den erreicht werden kann, daß die Lanze stets bis zu einer gewissen Tiefe in den Boden eingestochen wird.

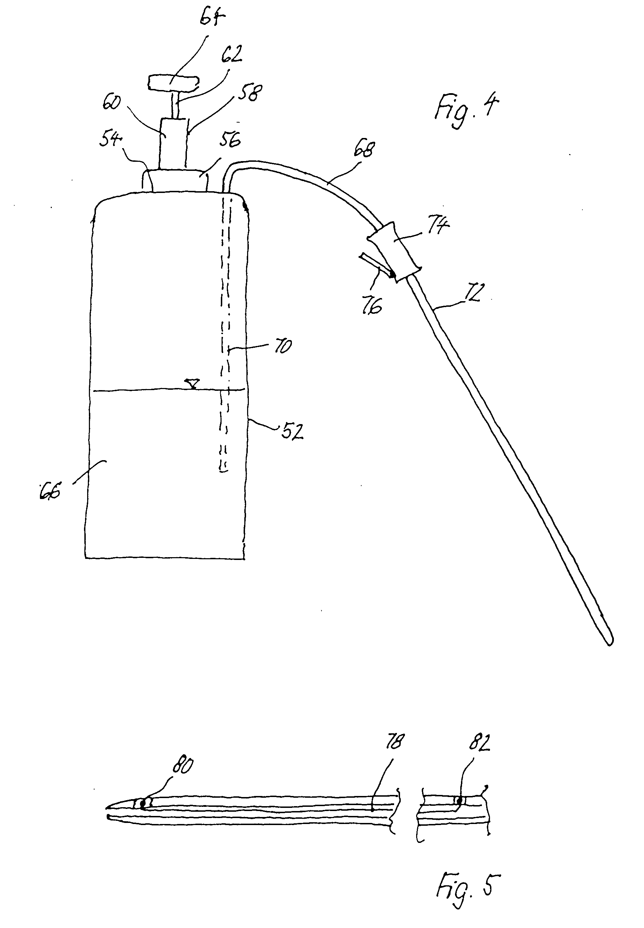

In Fig. 4 ist eine Ausführungsform einer erfindungsgemäßen Vorrichtung schematisch in ihrer Gesamtheit dargestellt. Die Vorrichtung umfaßt einen Behälter 52 aus Metall oder Kunststoff mit einer zylindrischen Form und einer oberen Öffnung 54. Die Öffnung 54 kann durch einen abnehmbaren Deckel 56 luftdicht verschlossen werden. In den Deckel ist eine Luftpumpe 58, die beispielsweise nach Art einer Fahrradluftpumpe ausgebildet ist, integriert. Sie umfaßt ein dicht in den Deckel eingelassenes, konzentrisch zum Deckel angeordnetes Rohr 60, in dem ein nicht gezeigter Kolben senkrecht verschiebbar angeordnet ist. Der Kolben sitzt am Ende einer Kolbenstange 62, die außerhalb des Rohres mit einem Handgriff 64 verbunden ist. Im übrigen ist die Luftpumpe in nicht gezeigter Weise mit einem Luftein- und -auslaß sowie Rückschlagventil versehen, derart, dass beim Hochziehen des Kolbens das Rückschlagventil schließt und der Luftdruck im Behälter 52 erhalten bleibt, während andererseits beim Herunterdrücken des Kolbens mit Hilfe des Handgriffs 64 die im Rohr befindliche Luft durch das Rückschlagventil in das Innere des Behälters 52 gedrückt wird. Es handelt sich um die typische Funktion einer Kolbenpumpe.

Bei einer derartigen Konstruktion kann mit Hilfe der Luftpumpe 58 im Innenraum des Behälters ein Druckluftpolster aufgebaut werden. Im unteren Behälterteil ist ein Vergrämungsmittel 66 angedeutet.

Von dem Behälter 52 geht eine Leitung 68 aus. die außerhalb des Behälters als flexibler Schlauch und innerhalb des Behälters als Steigrohr 70 ausgebildet sein kann. Die Leitung 68, 70 kann auch direkt vom unteren Bereich des Behälters 52 ausgehen. In jedem Falle muß die Leitung in demjenigen Bereich beginnen, der unterhalb des Flüssigkeitsspiegels des Vergrämungsmittels 66 liegt. Bei dieser Anordnung drückt das Druckluftpolster oberhalb des Vergrämungsmittels 66 dieses Vergrämungsmittel ständig in die Leitung 68, 70. Am Ende der Leitung 68 ist diese mit einer Lanze 72 verbunden, deren vorderer Bereich bereits anhand von Fig. 1 bis 3 erläutert worden ist. Am rückwärtigen Ende der Lanze 72 befindet sich ein Handgriff 74, in den ein nicht dargestelltes Ventil integriert ist, das den Lanzenkanal im Inneren der Lanze 72 je nach Ventilstellung verschließt oder freigibt. Zur Betätigung des Ventils ist ein Handhebel 76 vorgesehen.

Wenn der Handhebel 76 niedergedrückt wird, drückt das Luftpolster innerhalb des Behälters 52 das Vergrämungsmittel 66 durch die Leitung 68 und die Lanze 72. Die dargestellte Lösung hat den Vorteil, dass, nachdem ein Luftpolster in dem Behälter 52 aufgebaut ist, der Benutzer die Vorrichtung über längere Zeit benutzen kann und lediglich zu gegebener Zeit den Handhebel 76 niederdrücken muß.

Es ist jedoch aus möglich, das Vergrämungsmittel mit Hilfe einer Handpumpe direkt aus einem Behälter abzugeben.

Fig. 5 zeigt in einer Teilschnittdarstellung einer Lanze die Anordnung eines Drahtes 78 im Inneren der Lanze. Es soll davon ausgegangen werden, dass es sich um einen verhältnismäßig steifen Draht 78 handelt. Dieser Draht ist an seinen beiden Enden abgewinkelt und wird beispielsweise mit Hilfe von Lötzinn zu einem verstärkten Kopfstück 80, 82 erweitert. In der Wand der Lanze 72 befindet sich in unmittelbarer Nähe des vorderen, links in Fig. 5 gezeigten Endes und in einer weiter hinten liegenden Position seitliche, nicht bezeichnete Bohrungen, in die die beiden Kopfstücke des Drahtes eingefügt werden können.

Für die Art des Vergrämungsmittels soll hier keine Festlegung erfolgen. Vergrämungsmittel sind aus dem Bereich des Wildschutzes beispielsweise bekannt. Im allgemeinen werden die Geruchsstoffe an den Geruch der natürlichen Feinde des jeweiligen Tieres angenähert.

Die im einzelnen beschriebenen Ausführungsformen stellen nur Beispiele dar.

Zur Erfindung gehören alle Abschirmeinrichtungen im Bereich der vorderen Austrittsöffnungen, die das Eindringen von Erdboden in den Lanzenkanal 12 beim Einstechen der Lanze in den Boden verhindern. So ist u. a. auch möglich, die Austrittsöffnung des Lanzenkanals 12 gegenüber dem Durchmesser des Lanzenkanals erheblich dünner auszuführen, also auf dem Umfang der Austrittsöffnung einen nach innen vorspringenden Flansch stehen zu lassen, der nur von einer sehr feinen Austrittsöffnung durchdrungen wird.

Im übrigen kann anstelle einer durchgehenden Lanze auch ein Lanzenrohr in Verbindung mit einem vorderen Düsenkopf verwendet werden, der die hier beschriebenen Merkmale der Erfindung aufweist und mit dem Lanzenrohr verschraubt oder verlötet ist.

Ein Anschlag, der die ausgefahrene Endstellung des Schützkörpers 16 gemäß Fig. 1 bestimmt, kann u. a. durch einen durch den Lanzenkanal 12 geführten Draht gebildet werden.

## Patentansprüche

1. Vorrichtung zum Ausbringen eines flüssigen Vergrämungsmittels für Maulwürfe, Wühlmäuse und dergleichen,
- mit einem Behälter (52) zur Aufnahme des Vergrämungsmittels (66).
- einer rohrförmigen Lanze (10,72) mit einem vorderen und einem hinteren Ende, deren vordere Austrittsöffnung durch einen Schutzkörper (20,26,28,44) wenigstens teilweise abgeschirmt ist,
- einer Leitung (68,70), die den Behälter (52) mit dem hinteren Ende der Lanze (10,72) verbindet,
- einer Druckquelle (52,58,60,62.64) zum Austreiben des Vergrämungsmittels (66) aus dem Behälter (52) durch die Lanze (10,78) und
- einer Betätigungseinrichtung (74,76) zur Aktivierung der Druckquelle.

2. Vorrichtung nach Anspruch 1, **dadurch gekennzeichnet, dass** die Druckquelle gebildet wird durch ein im Behälter (52) erzeugtes Druckluftpolster.

3. Vorrichtung nach Anspruch 1, **dadurch gekennzeichnet, dass** die Druckquelle gebildet wird durch eine Pumpe zum Fördern des Vergrämungsmittels (66) aus dem Behälter (52).

4. Vorrichtung nach Anspruch 1 oder 2, **dadurch gekennzeichnet, dass** die Betätigungseinrichtung als ein mit Hilfe eines Handhebels (76) steuerbares Ventil im rückwärtigen Bereich der Lanze (10,72) ausgebildet ist.

5. Vorrichtung nach einem der Ansprüche 1 bis 4, **dadurch gekennzeichnet, dass** der Schutzkörper gebildet wird durch ein Ventil (16) in der Austrittsöffnung der Lanze (10), dessen Ventilkörper (18,20) zwischen einer Verschlußstellung, in der die Austrittsöffnung im wesentlichen verschlossen ist, und einer Öffnungsstellung, in der das Vergrämungsmittel austreten kann, in Längsrichtung des Lanzenkanals beweglich ist.

6. Vorrichtung nach Anspruch 5, **dadurch gekennzeichnet, dass** der Schutzkörper einen kugelförmigen, vor der Austrittsöffnung liegenden Kopf (20) und einen im Lanzenkanal (12) verschiebbar geführten Schaft (18) umfaßt.

7. Vorrichtung nach Anspruch 6, **dadurch gekennzeichnet, dass** entsprechend dem kugelförmigen Kopf (20) ein kugelschalenförmiger Sitz (22) um die Austrittsöffnung des Lanzenkanals (12) herum vorgesehen ist.

8. Vorrichtung nach Anspruch 1 oder 2, **dadurch gekennzeichnet, dass** der Schutzkörper gebildet wird durch den Kopf (28) einer Schraube (26), die in ein Innengewinde am vorderen Ende des Lanzenkanals (12) eingeschraubt ist.

9. Vorrichtung nach Anspruch 8, **dadurch gekennzeichnet, dass** die Schraube (26) eine Senkkopfschraube ist, der ein kegelförmiger Sitz (22) um das vordere Ende des Lanzenkanals (12) herum zugeordnet ist.

10. Vorrichtung nach Anspruch 9, **dadurch gekennzeichnet, dass** auf dem Schaft (30) der Schraube (26) eine achsenparallele Nut als Durchlaß für das Vergrämungsmittel vorgesehen ist.

11. Vorrichtung nach Anspruch 1 oder 2, **dadurch gekennzeichnet, dass** das vordere Ende des Lanzenkanals (46) durch einen Blindstopfen (44) vollständig verschlossen ist, und dass im vorderen Endbereich der Lanze seitlich austretende Austrittsöffnung (48, 50) vorgesehen sind.

12. Verfahren zum Ausbringen eines Vergrämungsmittels für Maulwürfe, Wühlmäuse und dergleichen unter Verwendung einer Vorrichtung gemäß einem der Ansprüche 1 bis 11, **dadurch gekennzeichnet, dass** das Vergrämungsmittel in den Behälter (52) gefüllt wird, dass die Lanze (10,76) in dem zu schützenden Geländebereich in den Boden gestochen werden, und dass die Betätigungseinrichtung (74,76) aktiviert wird, während sich die Lanze im Boden befindet.

13. Verfahren nach Anspruch 12, **dadurch gekennzeichnet, dass** die Betätigungseinrichtung beim Herausziehen der Lanze (10,76) aus dem Boden aktiviert wird.

14. Verfahren nach Anspruch 12, **dadurch gekennzeichnet, dass** die Lanze (10,76) bis zu einer Tiefe von ca. 1 m in den Erdboden eingestochen wird.

15. Verfahren nach Anspruch 13, **dadurch gekennzeichnet, dass** die Lanze (10,72) schräg und relativ flach in den Boden eingestochen wird.
